# EUROPEAN PATENT SPECIFICATION

(11) **EP 2 234 799 B1**
(45) Date of publication and mention of the grant of the patent: **26.09.2012**
(21) Application number: 07859163.3
(22) Date of filing: 21.12.2007
(51) Int. Cl.: B29D 30/00, B29D 30/22, B29D 30/70

(54) **Process and plant for building tyres for vehicle wheels**
Verfahren und Anlage zum Bau von Reifen für Fahrzeugräder
Procédé et installation de fabrication de pneus pour roues de véhicule

(43) Date of publication of application: 06.10.2010
(73) Proprietor: Pirelli Tyre S.P.A., 20126 Milano (IT)
(72) Inventor: MARCHINI, Maurizio, I-20126 Milano (IT); LO PRESTI, Gaetano, I-20126 Milano (IT); MUSITELLI, Ezio, I-20126 Milano (IT)
(74) Representative: Castiglia, Paolo
(86) International application number: PCT/IB2007/004065
(87) International publication number: WO 2009/081220

(56) References cited:
- WO-A-2005/095092
- FR-A- 2 617 087
- US-A1- 2001 008 158
- US-A1- 2005 194 101

## Description

The present invention relates to a process for building tyres for vehicle wheels.

The present invention also relates to a plant for building tyres for vehicle wheels, usable for carrying out the above mentioned building process.

Tyre production cycles comprise a building process, wherein the various components of the tyre itself are made and/or assembled in one or more building lines, and subsequently a moulding and vulcanization process is carried out in a suitable vulcanization line, adapted for defining the tyre structure according to a desired geometry and tread pattern.

A tyre generally comprises a toroidally ring-shaped carcass including one or more carcass plies, strengthened with reinforcing cords lying in substantially radial planes (a radial plane contains the rotation axis of the tyre). Each carcass ply has its ends integrally associated with at least one metal reinforcing annular structure, known as bead core, constituting the reinforcing at the beads, i.e. at the radially inner ends of the tyre, having the function of enabling the assembling of the tyre with a corresponding mounting rim. Placed crown wise to said carcass is a band of elastomeric material, called tread band, within which, at the end of the moulding and vulcanization steps, a raised pattern is formed for ground contact. A reinforcing structure, generally known as belt structure, is arranged between the carcass and the tread band. Such structure usually comprises, in the case of car tyres, at least two radially superposed layers of rubberised fabric provided with reinforcing cords, usually of metal material, arranged parallel to each other in each layer and in a crossed relationship with the cords of the adjacent layer, preferably symmetrically arranged with respect to the equatorial plane of the tyre. Preferably, the belt structure further comprises at a radially outer position thereof, at least on the ends of the underlying belt layers, also a third layer of textile or metallic cords, circumferentially disposed (at zero degrees).

The belt structure and the tread band together form the so called "crown structure" of the tyre.

Finally, in tyres of the tubeless type, a radially inner layer, called liner, is present which has imperviousness features for ensuring the air-tightness of the tyre itself.

To the aims of the present invention and in the following claims, by the term "elastomeric material" it is intended a composition comprising at least one elastomeric polymer and at least one reinforcing filler. Preferably, such composition further comprises additives such as cross-linking and/or plasticizing agents. By virtue of the cross-linking agents, such material may be cross-linked by heating, so as to form the final manufactured article.

In the present context, by the term "green tyre" it is indicated a tyre obtained by the building process and not moulded and vulcanized yet.

US 2005/0194101 discloses a plant for producing types of tyres different from each other. The plant includes a manufacturing unit including a plurality of work stations, devices for transfer and movement of the tyres being produced, and a vulcanizing unit including vulcanizing moulds for the tyre being produced. Each work station is designed to assemble at least one corresponding structural component on at least one type of tyre being produced. The devices for transfer and movement operate between the work stations and provide selective movement for each of the types of tyres being produced in proximity to corresponding work stations. The plant may also include a central processing unit which controls the devices for transfer and movement to coordinate processing stages for each type of tyre in the manufacturing unit and in the vulcanizing unit.

US 2001/0008158 discloses a method for manufacturing a pneumatic radial tire, including the steps of laminating a predetermined number of belt plies on a belt drum for forming a belt and winding one to several organic fiber cords continuously and spirally in the circumferential direction of the belt on the outer surface of the formed belt in order to form a band. The method comprises a step of expanding the diameter of belt drum so that the shape in axial section of the belt drum becomes the same as approximately the same as the finished shape of the band in vulcanisation mold.

FR 2 617 087 discloses a process for manufacturing a belt structure of a tyre, comprising the steps of disposing a first belt ply on a belt drum, radially expanding said belt drum, disposing a second belt ply on the first belt ply, turning up the axial ends of the first ply over the second ply, disposing a third belt ply on the second belt ply.

WO 2005/095092 discloses a method for manufacturing tyres for vehicle wheels, comprising the steps of disposing a carcass structure comprising at least one carcass ply on a primary drum; assembling a belt structure comprising at least one belt layer on an auxiliary drum; picking up the belt structure from the auxiliary drum; transferring the belt structure to a coaxially centred position relative to the carcass structure; shaping the carcass structure into a toroidal configuration to engage the belt structure with the carcass structure.

WO 01/32409, in the name of the same Applicant, describes a tyre building line provided with working stations, each arranged to make and assemble at least one structural component of the tyre being processed, wherein at least one series of tyres is treated at the same time, comprising at least one first and a second model of tyres differing from each other, and wherein the tyre transfer to the vulcanization line is carried out through robotized arms and according to a transferring rate equal to the transferring rate of the tyres to each of said working stations.

EP 1 481 791 A2 describes a method of simultaneously producing tyres in a multi-phase sequential production system, the tyres being selected from a group of tyres with different build specifications in different sizes. The method comprises the steps of: selecting the tyre building equipment and materials required for constructing the respective type of tyre; calculating the corresponding number of cycles that each building equipment must perform to build a given lot; and automatically chanting to a second building specification at a lot change, by switching to the second building specification after the last tyre of the first building specification passes; repeating the automatic changing to the next building specification at each station as each last tyre of each prior lot passes until a final lot is produced. The production system has at least four carcass building stations, each station being spaced at a predetermined distance, and preferably a crown structure building line, having working stations, separate from the carcass building line, wherein the carcass and the crown structures are joined in a segmented self-locking mould.

EP 0 015 113 A1 describes a machine and a method for folding the circumferential edge portions of a tyre component The folding machine comprises: an annular deck having a cylindrical support surface for the component and a precisely formed sharply shouldered peripheral deck edge, and a bladder assembly positioned axially and radially inwardly of said deck edge cooperating when inflated with said deck edge to fold the overhanging circumferential edge portion of the component at such deck edge.

The methods of the type described in WO 01/32409 are aimed at increasing productivity in manufacturing processes of tyres built on a toroidal forming support and using elementary semi-finished products for building by automated, standardised steps, synchronised with each other. Such methods, however, do not allow obtaining a high technological flexibility, that is, the possibility of using for each tyre elementary semi-finished products differing by type of elastomeric material or by type of textile or metal reinforcing cord. In fact, such methods are suitable for producing tyres that differ in limited features, such as dimensions, optional presence of some structural components of the tyre - such as one or two carcass plies, reinforcing elements in bead zone - , arrangement of the coils of rubber metal wires forming the bead cores in the bead zone, more or less extended belt layer at zero degrees, presence of a layer and sublayer in the tread band.

The method illustrated in EP 1 481 791, on the other hand, is technologically flexible as it allows obtaining tyres with semi-finished products having different features from one another, but it is limited in terms of productivity, for example as the model of tyre to be produced changes and require large sized plants for carrying out them.

The Applicant has also noted that in the production plants of this latter type, the management of a large number of materials and/or semi-finished products causes problems in synchronising the production steps of the various portions making up the tyre and thereby problems in the general management of the production plant with negative consequences on productivity.

The folding methods of the type described in EP 0 015 113 have the purpose of obtaining precise and well defined folding of tyre components, but they do not pursue nor attain high production flexibility and productivity.

In order to obtain a process and a plant for producing tyres wherein it is possible to make even high and very high performance tyres, with a high production ability and high technological flexibility, wherein it is necessary to carry out folding operations in some components of the tyre, the Applicant has found that by inserting machines of the type illustrated in EP 0 015 113 A1 in the production methods of the type illustrated in WO 01/32409 and EP 1 481 791, the illustrated problems relating to the flexibility or productivity of the above methods remained unchanged or became more critical.

The Applicant has therefore perceived that in order to produce tyres that require folding operations of at least one component in the building step, with technological requirements very different from one another, improving the productivity of processes of the type shown in WO 01/32409, and avoiding production plants of large dimensions and difficult to manage and synchronise like those illustrated in EP 1 481 791 A2, it is necessary to have a production plant provided with at least one work station dedicated to the above operation, in line with the concerned part of plant.

The Applicant has further noted that if the above folding operation must be carried out between the layers making up the tyre belt structure during the building of the same, such dedicated work station must be rapid both in the folding operations and in the inlet/outlet of the components to be folded, and very flexible from the point of view of the dimensions and materials used in the tyre to be produced.

The Applicant has thus perceived that having a tyre building plant provided with a crown structure building line comprising at least one first building drum of an annular assembly made by a plurality of belt layers, and a turning up work station comprising at least one auxiliary drum and at least one device for transferring the annular assembly from the building drum to the auxiliary drum and from the latter to at least one second building drum it is possible to simultaneously produce small batches of tyres with a high technological complexity and differentiation achieving high productivity and quality of the final product.

Finally, the Applicant has found that carrying out a tyre building process comprising a step of building the belt structure which in turn comprises the steps of: building on at least one first building drum an annular assembly comprising a plurality of belt layers, transferring the annular assembly on at least one auxiliary drum, turning up the ends of the belt layers, and transferring the annular assembly with the ends turned up on at least one second building drum, it is possible to obtain high technological flexibility tyres while keeping also the productivity high.

More precisely, in accordance with a first aspect thereof, the invention relates to a process for building tyres for vehicle wheels comprising the steps of:
i) building a carcass structure of a green tyre in at least one carcass structure building line, said carcass structure comprising at least one carcass ply and a pair of annular anchoring structures;
ii) building a crown structure of a green tyre in at least one crown structure building line, said crown structure comprising a belt structure and a tread band;
wherein the step ii) of building the crown structure comprises at least one step iii) of building the belt structure which in turn comprises the steps of:
a) building on at least one first building drum an annular assembly comprising a first radially inner belt layer and at least one second belt layer radially external to said first belt layer;
b) transferring said annular assembly on at least one auxiliary drum;
c) turning up axially opposite end portions of the first radially inner belt layer so as to obtain at least a partial overlapping of the end portions of the first belt layer on said at least one second radially outer belt layer;
d) transferring said annular assembly from said at least one auxiliary drum on at least one second building drum.

Being compatible with the possibility of using elementary semi-finished products differing for each tyre produced, providing the transfer of the annular assembly from a building drum to an auxiliary drum, the performance of the belt turning up step on such auxiliary drum and the subsequent transfer of the annular assembly on a second building drum, said process allows obviating the aforementioned disadvantages of low technological flexibility, keeping high performance quality of the finished product and high productivity even for tyres that require complex assembly operations wherein there is at least one folding action on the components subject to building operations.

The process according to the present invention therefore is technologically flexible and efficient.

Finally, since the building process according to the present invention provides the transfer of the annular assembly from the auxiliary drum on a second building drum, it attains the advantage of allowing time by time the selection of the most suitable type of drum for the operations to be carried out.

In accordance with a second aspect thereof, the invention relates to a plant for building tyres for vehicle wheels comprising:
- at least one carcass structure building line, said carcass structure comprising at least one carcass ply and a pair of annular anchoring structures;
- at least one crown structure building line, said crown structure comprising at least one belt structure and a tread band;
characterised in that the crown structure building line comprises:
- at least one first building drum whereon an annular assembly comprising a first radially inner belt layer and at least one second belt layer radially external to said first belt layer is built;
- at least one auxiliary drum whereon axially opposite end portions of said first belt layer are turned up on said at least one second belt layer;
- at least one second building drum suitable for receiving the annular assembly with the axially opposite end portions of said first belt layer turned up on said at least one second belt layer; and
- at least one device for transferring said annular assembly from said at least one first building drum to said at least one auxiliary drum and from said at least one auxiliary drum to said at least one second building drum.

Carrying out the above process, said plant achieves the same advantages mentioned above.

The Applicant has further noted that the building plant, providing an auxiliary drum whereon the turning up operation is carried out which is separate from the building drum, and a transfer device to and from said auxiliary drum, allows overcoming also the above disadvantages of technological flexibility, since it is possible to select time by time the most suitable features of the drums for the type and performance of the tyre to be produced.

The present invention, in at least one of the above aspects thereof, can exhibit at least one of the following preferred features.

In one embodiment of the present invention, said process provides that the above step a) of building the annular assembly comprises the further step of building a third belt layer.

Preferably, said belt layer is radially external to said second belt layer.

In this case, the step c) of turning up comprises the step of turning up axially opposite end portions of said first radially inner belt layer so as to obtain at least a partial overlapping of the end portions of the first belt layer on said second belt layer and on said third belt layer radially external to said second belt layer.

Preferably, said third belt layer is radially infernal to said first belt layer.

According to one embodiment of the invention, the second building drum is equal to the first building drum. This is economically advantageous when the product requirements allow the use of a single building drum, or when it is possible to optimise both the pre-turning up and the post-turning up operations with a single building drum.

The step iii) of building the belt structure advantageously comprises, before the step a) of building the annular assembly, the step of:
a1) applying an under-belt layer in a position radially external to the first building drum.

Such under-belt layer has the function of releasing the end of the belt structure from the carcass structure for reducing the stresses generated in operation.

Preferably, the step a) of building the annular assembly comprises the sub-step of:
a2) laying at least one intermediate element on the first belt layer.

After step d), step iii) comprises a step e) of:
applying at least one first layer of textile or metal cords, arranged circumferentially, in a position radially external to said annular assembly.

The step ii) of building the belt structure comprises, after the step e) of applying at least one cord layer, a step f) of:
applying at least one tread band in a position radially external to said cord layer.

The step ii) of building the belt structure comprises, after the step f) of applying the tread band, a step g) of:
applying at least a portion of sidewalls of the tyre being processed in a position axially external to said tread band.

Advantageously, the step c) of turning up is carried out in a turning up work station of the crown structure building line.

Preferably, the step b) of transferring the annular assembly on the auxiliary drum is carried out in a turning up work station of the crown structure building line.

Preferably, the step d) of transferring the annular assembly on the second building drum is carried out in a turning up work station of the crown structure building line.

Preferably, the step ii) of building the belt structure comprises, before step f) of applying the tread band, the sub-step f) of applying at least one tread band sublayer on the cord layer applied in step e).

According to one embodiment of the invention, step f) comprises the application of two layers of tread band.

Preferably, at least one between step f) and sub-step f') is carried out by applying at least one continuous elongated element of elastomeric material according to side by side or partially overlapped coils in a position radially external to said belt structure.

Advantageously, at least one between step a1) and step a2) is carried out by applying at least one continuous elongated element of elastomeric material according to side by side or partially overlapped coils in a position radially external respectively to said first building drum or to said first belt layer.

According to preferred embodiments, at least one between steps a) and e) comprises the pre-step h) of supplying elementary semi-finished products in the respective work stations.

Preferably, said elementary semi-finished products are strips of elastomeric material cut to size and comprising at least one textile or metal elongated reinforcing element thereinside.

Preferably, said elementary semi-finished products are applied next to one another so that the longitudinal axis thereof exhibits at least along a portion the same predetermined angle with the circumferential direction of the first building drum.

The process according to the invention may comprises the additional step h') of preparing elementary semi-finished products in a semi-finished product preparation line.

According to preferred embodiments, the process further comprises the step j) of adjusting the dimensions of at least one between the first building drum, the second building drum and the auxiliary drum.

Advantageously, said step j) comprises the radial adjustment of the first building drum.

Advantageously, said step j) comprises the radial adjustment of the second building drum.

Advantageously, said step j) comprises the radial and axial adjustment of the auxiliary drum.

This ensures high product and technological flexibility.

Preferably, at least one between the first and the second building drum is transferred from a work station of the crown structure building line to the next work station by at least one robotized arm.

According to one preferred embodiment, step b) of transferring said annular assembly on at least one auxiliary drum is carried out by transfer devices.

Preferably, said transfer devices also perform the step d) of transferring said annular assembly from said at least one auxiliary drum on said at least one first or second building drum.

The tyre building process according to one embodiment of the invention, further comprises at least a step k) of adjusting the dimensions of said transfer devices.

Preferably, such adjustment takes place in radial direction so that the transfer devices are suitable for finished products of different dimensions.

Preferably, such adjustment takes place in axial direction so that the transfer devices are suitable for products with different technological requirements.

Advantageously, at least one between step b) of transferring the annular assembly on at least one auxiliary drum and step d) of transferring the annular assembly on the first or second building drum is followed by a step 1) of shaping the belt structure.

Preferably, said step 1) is carried out by expanding the auxiliary drum.

Even more preferably, said step 1) is carried out by expanding at least one between said first building drum and second building drum.

The plant for building tyres for vehicle wheels, according to one alternative embodiment, provides that the second building drum coincides with the first building drum, so as to achieve the above advantages.

According to preferred embodiments, the second building drum is geometrically different from the first building drum.

Such feature allows choosing the most geometrically suitable drum for the steps to be performed.

For example, if the technological requirements of a product require the axial laying (that is, at 90 degrees) in a position radially external to said first building drum of reinforcing elements of elastomeric material comprising at least one textile or metal elongated reinforcing element, it is necessary to have a drum whose outer surface is flat, that is, does not exhibit concavity or convexity.

In fact, only in this way it is possible to have contiguous elements without discontinuity or overlapping.

However, the subsequent laying of textile or metal cords, arranged circumferentially (at 0 degrees), in radially outer position, at least on the ends of the underlying belt layers, must necessarily be carried out on an already shaped tyre, and thus supported by a drum provided with a convex outer surface, since such layer cannot be subject to traction due to the poor elastic properties thereof.

The possibility of having building drums differing from the geometrical point of view therefore ensures the optimal execution of each step of the process according to the invention.

In particular, it is preferable that the second building drum comprises a shaping surface.

Preferably, the auxiliary drum is geometrically different from the first building drum.

Preferably, the auxiliary drum comprises a shaping surface.

Even more preferably, said shaping surface is convex.

According to one embodiment of the invention, the crown structure building line comprises at least one turning up work station comprising the auxiliary drum and the transfer device.

Preferably, the turning up work station further comprises devices for turning up at least one part of the axially opposite end portions of the first belt layer on said at least one second belt layer, suitable for cooperating with the auxiliary drum.

According to one embodiment of the invention, the crown structure building line also comprises a work station for applying the under-belt layer provided with devices for applying an under-belt layer on the first building drum.

Said devices preferably comprise a dispenser of a continuous elongated element of elastomeric material and actuators for moving the first building drum so as to wind said continuous elongated element according to side by side or at least partially overlapped coils in a position radially external to the first building drum.

The crown structure building line advantageously comprises, upstream of the turning up work station, the following work stations:
- a work station for applying a first belt provided with devices for applying at least one first belt layer in a position radially external to the first building drum;
- a work station for applying a second belt provided with devices for applying a second belt layer in a position radially external to the first belt layer.

Preferably, the crown structure building line comprises, downstream of the turning up work station, the following work stations:
- a work station for applying cords provided with devices for applying at least one first layer of textile or metal cords, arranged circumferentially on the radially outer belt layer;
- at least one tread band building work station provided with devices for applying at least one tread band in a position radially external to the cord layer.

Preferably, the crown structure building line comprises a work station for laying intermediate elements provided with devices for laying at least one intermediate element on the first belt layer.

Such devices advantageously comprise a dispenser of a continuous elongated element of elastomeric material and actuators for moving said first building drum so as to wind said continuous elongated element according to side by side or at least partially overlapped coils in a position radially external to said first belt layer.

The crown structure building line may further comprise a sidewall building work station provided with devices for building at least a portion of sidewalls in a position axially external to the tread band.

Such devices advantageously comprise a dispenser of a continuous elongated element of elastomeric material and actuators for moving at least one between said first or second building drum so as to wind said continuous elongated element according to side by side or at least partially overlapped coils.

According to one embodiment of the invention the building plant comprises at least two tread band building work stations.

Preferably, the work station for applying a first belt of the crown structure building line is also provided with devices for applying a third belt layer in a position radially internal to said first belt layer.

Even more preferably, the crown structure building line comprises, upstream of said first belt application work station, a work station for applying a third belt provided with devices for applying a third belt layer in a position radially internal to said first belt layer.

Preferably, the work station for applying a second belt of the crown structure building line is also provided with devices for applying a third belt layer in a position radially external to said second belt layer.

As an alternative, the crown structure building line comprises, downstream of said second belt application work station, a work station for applying a third belt provided with devices for applying a third belt layer in a position radially external to said second belt layer.

Preferably, a tread band sublayer application work station is positioned downstream of the work station for applying the cords, provided with devices for applying at least one tread band sublayer in a position radially external to the cord layer.

Such devices comprise a dispenser of a continuous elongated element of elastomeric material and actuators for moving one between said first or second building drum so as to wind said continuous elongated element according to side by side or at least partially overlapped coils.

According to preferred embodiments, at least one between the first belt application work station, the second belt application work station, the third belt application work station and the cord application work station is operatively associated with at least one unit for supplying elementary semi-finished products in the respective work stations.

Preferably, said elementary semi-finished product supplying work station supplies strips of elastomeric material in a continuous manner or cut to size and comprising at least one textile or metal elongated reinforcing element thereinside.

Advantageously, the building plant also comprises a line for preparing elementary semi-finished products suitable for being supplied in at least one between the carcass structure building line and the crown structure building line.

According to preferred embodiments, the plant comprises devices for adjusting the dimensions of at least one between the first building drum, the second building drum and the auxiliary drum.

In particular, it is preferable that the first building drum is adjustable in radial direction.

Preferably, the second building drum is adjustable in radial direction.

Preferably, the auxiliary drum is adjustable in radial direction and in axial direction.

Advantageously, the crown structure building line is provided with devices for transferring the building drum from a work station of the same crown structure building line to the next work station.

Preferably, said devices for transferring the building drum from a work station to the next work station comprise at least one robotized arm.

Advantageously, the dimensions of said transfer devices are adjustable.

In particular, the transfer devices are adjustable in radial direction.

In particular, the transfer devices are adjustable in axial direction.

Preferably, the transfer devices comprise a plurality of sectors.

Further features and advantages of the invention will appear more clearly from the following description of some preferred examples of building plants and processes according to the invention, made by way of an indicative non-limiting example with reference to the annexed drawings, wherein:
- figure 1 shows a schematic layout of a plant for building tyres for vehicle wheels wherein the process according to one embodiment of the present invention is carried out;
- figure 2 shows a detail of figure 1 which shows in detail a belt turning up work station according to one embodiment of the invention;
- figures 3a - 3m show the turning up work station of figure 2 during the different operating steps of the building process according to one embodiment of the present invention.

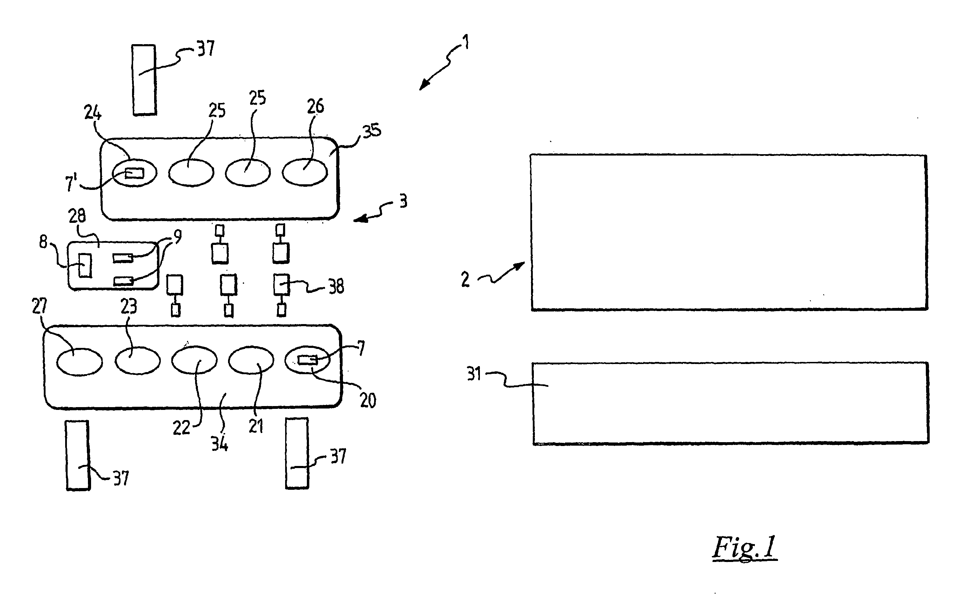

With reference to figure 1, reference numeral 1 globally indicates a plant for building tyres for vehicle wheels according to the present invention.

The building plant 1 comprises a carcass structure building line 2 and a crown structure building line 3.

The carcass structure of the tyre to be built comprises at least one carcass ply and a pair of annular anchoring structures while the crown structure comprises at least one belt structure and a tread band.

The crown structure building line 3 comprises at least one first building drum 7 whereon an annular assembly 4 comprising a first belt layer and at least one second belt layer radially external to said first belt layer is built.

The crown structure building line 3 further comprises at least one auxiliary drum 8 whereon axially opposite end portions of said first belt layer are turned up so as to obtain at least a partial overlapping of the end portions of the first belt layer on said at least one second belt layer.

The crown structure building line 3 also includes a second building drum 7' suitable for receiving the annular assembly 4 with the axially opposite end portions of said first belt layer turned up on said at least one second belt layer.

In other words, the assembly is built on a first building drum 7, and after the turning up operation it is transferred on a second building drum 7', preferably geometrically different from the first building drum 7.

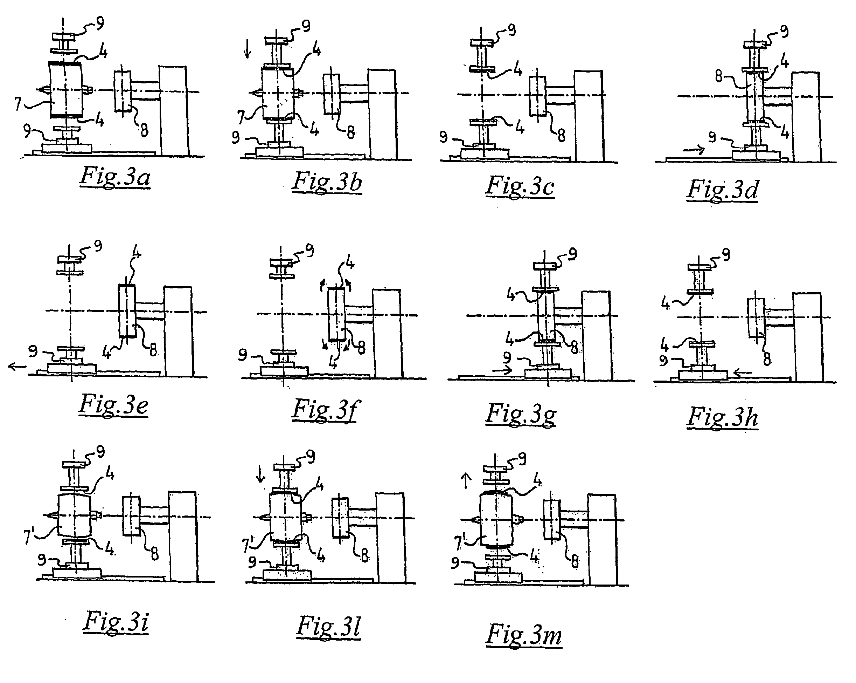

In particular, said second building drum 7' comprises a shaping surface, preferably convex, as shown in figures 3i-3m.

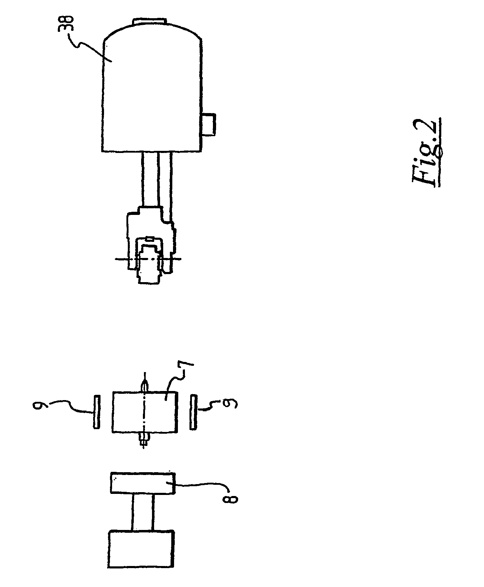

With special reference now to figure 2, it is shown that the crown structure building line 3 further comprises at least one transfer device 9 of said annular assembly 4 from said at least one first building drum 7 to said at least one auxiliary drum 8 and from the latter to said at least one second building drum 7'.

In one alternative embodiment, not shown in the figures, the auxiliary drum 8 is geometrically different from the first building drum 7.

In fact, it may comprise a shaping surface, preferably convex, if necessary.

As shown in figure 1, the crown structure building line 3 comprises a turning up work station 28 which in turn includes the auxiliary drum 8 and the transfer device 9.

Such turning up work station 28 further comprises devices for turning up at least a part of the axially opposite end portions of the first belt layer on said at least one second belt layer. Such turning devices, not shown in the figures, are suitable for cooperating with said auxiliary drum 8 in carrying out the turning up operation.

The crown structure building line 3 also comprises a work station for applying the under-belt layer 20 provided with devices for applying an under-belt layer on the first building drum 7.

Such under-belt layer application work station 20 is arranged upstream of the subsequent work stations of the crown structure building line 3.

The devices for applying an under-belt layer comprise a dispenser of a continuous elongated element of elastomeric material and actuators for moving the first building drum 7 so as to wind said continuous elongated element according to side by side or at least partially overlapped coils in a position radially external to the said building drum 7.

The following work stations of the crown structure building line 3 are further arranged upstream of the turning up work station 28:
- a work station for applying a first belt 21 provided with devices for applying at least one first belt layer in a position radially external to the first building drum 7; and
- a work station for applying a second belt 23 provided with devices for applying a second belt layer in a position radially external to the first belt strip.

Moreover, the crown structure building line 3 comprises the following work stations downstream of the turning up work station 28:
- a cord application work station 24 provided with devices for applying at least one first layer of textile or metal cords, arranged circumferentially on the radially outer belt layer, these being preferably applied at least at the axially outer portions thereof; and
- at least one tread band building work station 25 provided with devices for applying at least one tread band in a position radially external to said cord layer.

The crown structure building line 3 further comprises a work station 22 for laying intermediate elements provided with devices for laying at least one intermediate element on the first belt layer.

This work station 22 is arranged upstream of the second belt application work station 23 and the relevant devices comprise a dispenser of a continuous elongated element of elastomeric material and actuators for moving said first building drum 7 so as to wind said continuous elongated element according to side by side or at least partially overlapped coils in a position radially external to said first belt layer.

According to the embodiment shown in figure 1, the crown structure building line 3 further comprises a sidewall building work station 26 provided with devices for building at least a portion of sidewalls in a position axially external to the tread band.

Preferably, such devices comprise a dispenser of a continuous elongated element of elastomeric material and actuators for moving one between said first or second building drum 7, 7' so as to wind said continuous elongated element according to side by side or at least partially overlapped coils.

The continuous elongated element is supplied by a supplying line, not shown in the figures, which supplies a semi-finished product shaped as a continuous strip of elastomeric material, wherefrom crops of predetermined length, correlated to the desired specification of the tyre to be obtained, are optionally cut.

The building plant 1 shown in figure 1 comprises two tread band building work stations 25, but it may also comprise a greater number thereof, if required by specific requirements of the final product.

In each of said tread band building work stations 25, said application devices comprise a dispenser of a continuous elongated element of elastomeric material and actuators for moving one of said first or second building drum 7, 7' so as to wind said continuous elongated element according to side by side or at least partially overlapped coils in a position radially external to said belt structure.

The work station for applying the first belt 21 may also be provided with devices for applying a third belt layer in a position radially internal to said first belt layer.

As an alternative, the crown structure building line 3 comprises, upstream of the first belt application work station 23, a work station for applying a third belt 27 (not shown in figure 1) provided with devices for applying a third belt layer in a position radially internal to said first belt layer.

The work station for applying the second belt 23 may also be provided with devices for applying a third belt layer in a position radially external to said second belt layer.

As an alternative, the crown structure building line 3 comprises, downstream of the second belt application work station 23, a work station for applying a third belt 27 (not shown in figure 1) provided with devices for applying a third belt layer in a position radially external to said second belt layer.

Preferably, said third belt layer is axially less extended than said first belt layer and second belt layer.

According to one embodiment not shown in the figures, a tread band sublayer application work station is arranged downstream of the cord application work station 24, provided with devices for applying at least one tread band sublayer in a position radially external to said belt structure and preferably to said cord layer.

Also such devices comprise a dispenser of a continuous elongated element of elastometic material and actuators for moving one between said first or second building drum 7, 7' so as to wind said continuous elongated element according to side by side or at least partially overlapped coils.

At least one between the first belt application work station 21, the second belt application work station 23, the third belt application work station 27, and the cord application work station 24 is operatively associated with at least one unit for supplying elementary semi-finished products 37 in the respective work stations.

However, it is preferable that one elementary semi-finished product supplying unit 37 is associated with each of them.

Semi-finished products in the shape of continuous strip are advanced in a known manner along each unit for supplying elementary semi-finished products 37, which are then optionally cut into crops of length corresponding to the desired specification or of the annular assembly 4 whereon they are supplied.

Each of said elementary semi-finished product supplying work stations therefore supplies strips of elastomeric material in a continuous manner or cut to size and comprising at least one textile or metal elongated reinforcing element thereinside.

The building plant 1 shown in figure 1 further comprises a line for preparing elementary semi-finished products 31 suitable for being supplied in at least one between the carcass structure building line 2 and the crown structure building line 3.

The building plant 1 may be provided with devices for adjusting the dimensions of at least one between the first building drum 7, the second building drum 7' and the auxiliary drum 8.

It is preferable that the first building drum 7 and/or the second building drum 7' is adjustable in radial direction and that the auxiliary drum 8 is adjustable both in radial direction and in axial direction.

The crown structure building line 3 is provided with devices for transferring the building drum 7, 7' from a work station of the same crown structure building line 3 to the next work station. As shown in figures 1 and 2, said devices for transferring the building drum 7, from a work station to the next work station comprise at least one robotized arm 38.

The dimensions of the transfer devices 9 are adjustable and, preferably, in radial and/or axial direction.

These transfer devices 9 comprise a plurality of sectors, not shown in the figures.

Always with reference to figure 1, it is visible that in one embodiment the crown structure building line 3 comprises:
- an annular assembly building unit 34 wherein the annular assembly 4 is built, comprising a first belt layer and at least one second belt layer radially external to said first belt layer, on said at least one first building drum 7, preferably comprising an under-belt layer application work station 20 and at least one first belt application work station 21, and one second belt application work station 23;
- a turning up work station 28 wherein the axially opposite end portions of the first belt layer are turned up on said at least one second belt layer; and
- a crown structure completing unit 35 wherein the crown structure is completed on a second building drum 7', preferably comprising a cord application work station 24, at least one tread band building work station 25 and preferably a sidewall building work station 26.

In other words, the annular assembly building unit 34 is suitable for carrying out the pre-turning up operations on the first building drum 7 and the crown structure completing unit 35 is suitable for carrying out the post-turning up operations on the second building drum 7'.

With reference to the building plant 1 illustrated in figure 1, a preferred embodiment of a process for building tyres for vehicle wheels shall now be described.

According respectively to a step i) and to a step ii), a process for building tyres for vehicle wheels provides the building of a carcass structure of a green tyre in at least one carcass structure building line 2, and the building of a crown structure of a green tyre in at least one crown structure building line 3.

The carcass structure comprises at least one carcass ply and a pair of annular anchoring structures and the crown structure comprises a belt structure and a tread band.

Such step ii) of building the crown structure comprises at least one step iii) of building the belt structure which, according to the present invention, comprises the steps a) - d) described below.

According to a step a), an annular assembly 4 comprising a first belt layer and at least one second belt layer radially external to said first belt layer, is built on at least one first building drum 7.

Afterwards, the annular assembly 4 is transferred on at least one auxiliary drum 8, according to a step b) of the present invention, shown in figure 3e.

Afterwards, a step c) of turning up axially opposite end portions of the first belt layer is carried out so as to obtain at least a partial overlapping of the end portions of the first belt layer on said at least one second radially outer belt layer.

Preferably, such step c) of turning up is carried out in a turning up work station 28 of the crown structure building line 3, shown in figure 1.

In that case, also step b) of transferring the annular assembly 4 on at least one auxiliary drum 8 is carried out in said turning up work station 28.

Finally, the step d) of transferring said annular assembly 4 from said at least one auxiliary drum 8 on at least one second building drum 7' is carried out, as shown in figures 3f - 3m.

Also such step d) of transferring said annular assembly 4 from said at least one auxiliary drum 8 on said at least one second building drum 7' is optionally carried out in said turning up work station 28.

According to one embodiment of the invention not shown in the figures, the step a) of building the annular assembly 4 comprises the further step of building a third belt layer radially internal to said first belt layer.

In this case, the step c) of turning up comprises the step of turning up axially opposite end portions of said first intermediate belt layer between said third belt layer and said second belt layer so as to obtain at least a partial overlapping of the end portions of the first belt layer on said second belt layer radially external to the first belt layer.

According to a further embodiment of the invention not shown in the figures, the step a) of building the annular assembly 4 comprises the further step of building a third belt layer radially external to said second belt layer.

In this case, the step c) of turning up comprises the step of turning up axially opposite end portions of said first radially inner belt layer so as to obtain at least a partial overlapping of the end portions of the first belt layer on said second belt layer radially external to the first belt layer and on said third belt layer radially external to said second belt layer.

In any case, the end portions of the radially outermost end portions of the annular assembly 4 are turned up on at least one radially innermost layer.

According to one embodiment not shown in the figures, the second building drum 7' coincides with the first building drum 7. That is, once finished the turning up operation, the annular assembly 4 is transferred again on the first building drum 7 whereon the subsequent building steps will take place into the crown structure completing unit 35.

According to one preferred embodiment, the step iii) of building the crown structure comprises, before step a) of building the annular assembly 4, the step a1) of applying an under-belt layer in a position radially external to the first building drum 7.

Preferably, said step a) of building the annular assembly 4 comprises the sub-step a2) of laying at least one intermediate element on the first belt layer.

The step a1) and/or the sub-step a2) are carried out by applying at least one continuous elongated element of elastomeric material according to side by side or partially overlapped coils in a position radially external respectively to said first building drum 7 and/or to said first belt layer.

After step d), a step e) of applying at least one first layer of textile or metal cords, arranged circumferentially, in a position radially external to said annular assembly 4, is preferably carried out.

After said step e) of applying at least one cord layer, a step f) of applying at least one tread band in a position radially external to said cord layer is carried out. Preferably, such tread band comprises at least two layers of tread band.

Afterwards, at least a portion of sidewalls of the tyre being processed is preferably applied in a position axially external to said tread band, according to a step g) of the present invention.

According to preferred embodiments, before step f) of applying the tread band, a sub-step f') of applying at least one tread band sublayer on the cord layer applied in step e) is carried out.

The above step f) and/or sub-step f') are carried out by applying at least one continuous elongated element of elastomeric material according to side by side or partially overlapped coils in a position radially external to said belt structure.

According to one preferred embodiment, at least one between steps a) and e) comprises the pre-step h) of supplying elementary semi-finished products in the respective work stations.

The semi-finished products are for example dispensed in the shape of a continuous strip, then they are optionally cut into crops of length corresponding to the desired specification or of the annular assembly 4 whereon they are dispensed.

Such elementary semi-finished products may therefore comprise strips of elastomeric material optionally cut to size and comprising at least one textile or metal elongated reinforcing element thereinside.

Said elementary semi-fmished products may further be applied next to one another so that the longitudinal axis thereof exhibits at least along a portion the same predetermined angle with the circumferential direction of the first building drum 7.

The tyre building process according to this embodiment may comprises the additional step h') of preparing elementary semi-finished products in a semi-finished product preparation line 31.

The building process further comprises the step j) of adjusting the dimensions of at least one between the first building drum 7, the second building drum 7' and the auxiliary drum 8.

Preferably, the step i) comprises the radial adjustment of the first building drum 7 and/or the radial adjustment of the second building drum 7' and/or the radial and axial adjustment of the auxiliary drum 8.

As visible in figures 1 and 2, the first and/or the second building drum 7, 7' is transferred from a work station of the crown structure building line 3 to the next work station by at least one robotized arm 38.

Both for the first building drum 7 and for the second building drum 7', are preferably provided return paths (not shown in the figures) to the first work station respectively into the annular assembly building unit 34 and into the crown structure completing unit 35.

If the second building drum 7' coincides with the first building drum 7, said return path carries the first building drum 7 from the last work station of the crown structure completing unit 35 to the first work station of the annular assembly building unit 34.

On the other hand, the step b) of transferring the annular assembly 4 on at least one auxiliary drum 8 is carried out by transfer devices 9, as well visible in figures 3a - 3e.

Also the step d) of transferring said annular assembly 4 from said at least one auxiliary drum 8 on said at least one first or second building drum 7, 7' is carried out by transfer devices 9. This is clearly visible in figures 3f - 3m.

With particular reference to figures 3a - 3m, the tyre building process in steady operating conditions according to one preferred embodiment of the invention shall now be described.

Figure 3a shows an annular assembly 4 built on a first building drum 7, according to the above step a).

In figure 3b it is shown how the transfer devices 9 are radially adjusted up to contact the annular assembly 4.

The subsequent removal of the first building drum 7 shown in figure 3c, starts the step b) of transferring the annular assembly 4 on the auxiliary drum 8. In fact, during this step, the annular assembly 4 is separated from the building drum 7 and retained by the transfer devices 9, to be then transferred to the auxiliary drum 8 during the sequential steps shown in figures 3d and 3e.

Figure 3d shows how the transfer devices 9, wherewith the annular assembly 4 is associated, shift in the direction indicated by the arrow to position at the auxiliary drum 8. In this position, the annular assembly contacts such auxiliary drum 8 and is separated from the transfer devices by shifting of the same towards the starting position thereof (figure 3e).

At this point, the step b) of transferring the annular assembly 4 on the auxiliary drum 8 is completed.

Subsequently the step f) of turning up, schematically shown in figure 3f, is carried out.

In figure 3g, the step d) of transferring the annular assembly 4 on a second building drum 7' starts. In such figure, in fact, it is shown how the transfer devices 9 shift at the auxiliary drum 8 and are radially adjusted until they contact the annular assembly 4 with the ends turned up.

Figure 3h shows how the transfer devices 9 pick up the annular assembly 4 from the auxiliary drum 8 and shift towards the initial position thereof.

In figure 3i, a second building drum 7', geometrically different from the first building drum 7, is arranged at the transfer devices 9.

In figure 3l, the transfer devices 9 wherewith the annular assembly 4 is associated, are radially adjusted up to contact the second building drum 7'.

In figure 3m, the transfer devices 9 radially move away from the second auxiliary drum 7' unloading the annular assembly 4 thereon and thus completing step d).

As mentioned before, and as partially shown in the above figures 3a - 3m, the tyre building process comprises at least one step k) of adjusting the dimensions of said transfer devices 9. In particular, such step k) comprises the radial and/or axial adjustment of said transfer devices 9.

At least one between step b) of transferring the annular assembly 4 on at least one auxiliary drum 8 and step d) of transferring the annular assembly 4 on said at least a first or second building drum 7, 7' is followed by a step 1) of shaping of the belt structure.

In particular, such step is carried out by expanding respectively the auxiliary drum 8 or of the first or second building drum 7, 7'.

## Claims

1. Process for building tyres for vehicle wheels comprising the steps of:
i) building a carcass structure of a green tyre in at least one carcass structure building line (2), said carcass structure comprising at least one carcass ply and a pair of annular anchoring structures;
ii) building a crown structure of a green tyre in at least one crown structure building line (3), said crown structure comprising a belt structure and a tread band;
wherein the step ii) of building the crown structure comprises at least one step iii) of building the belt structure which in turn comprises the steps of:
a) building on at least one first building drum (7) an annular assembly (4) comprising a first radially inner belt layer and at least one second belt layer radially external to said first belt layer;
b) transferring said annular assembly (4) on at least one auxiliary drum (8);
c) turning up axially opposite end portions of the first radially inner belt layer so as to obtain at least a partial overlapping of the end portions of the first belt layer on said at least one second radially outer belt layer;
d) transferring said annular assembly (4) from said at least one auxiliary drum (8) on at least one second building drum (7').

2. Process according to claim 1, wherein the step a) of building the annular assembly (4) comprises the further step of building a third belt layer.

3. Process according to claim 2, wherein said third belt layer is radially external to said second belt layer.

4. Process according to claim 2, wherein said third belt layer is radially internal to said first belt layer.

5. Process according to claim 3, wherein the step c) of turning up comprises the step of turning up axially opposite end portions of said first radially inner belt layer so as to obtain at least a partial overlapping of the end portions of the first belt layer on said second belt layer radially external to the first belt layer and on said third belt layer radially external to said second belt layer.

6. Process for building tyres according to any one of the previous claims, wherein said step iii) comprises, after step d), a step e) of:
applying at least one first layer of textile or metal cords, arranged circumferentially, in a position radially external to said annular assembly (4).

7. Process for building tyres according to any one of the previous claims, wherein said step c) of turning up the axially opposite end portions of said first radially inner belt layer on said at least one second radially outer belt layer is carried out in a turning up work station (28) of the crown structure building line (3).

8. Process for building tyres according to any one of the previous claims, wherein at least one between steps a) and e) comprises the pre-step h) of supplying elementary semi-finished products in the respective work stations.

9. Process for building tyres according to claim 8, wherein said elementary semi-finished products are strips of elastomeric material cut to size and comprising at least one textile or metal elongated reinforcing element thereinside.

10. Process for building tyres according to claim 8 or 9 wherein said elementary semi-finished products are applied next to one another so that the longitudinal axis thereof exhibits at least along a portion the same predetermined angle with the circumferential direction of the first building drum (7).

11. Process for building tyres according to any one of the previous claims, further comprising the step j) of adjusting the dimensions of at least one between the first building drum (7), the second building drum (7') and the auxiliary drum (8).

12. Process for building tyres according to any one of the previous claims, wherein at least one between step b) of transferring the annular assembly (4) on at least one auxiliary drum (8) and step d) of transferring the annular assembly (4) on said at least one first or second building drum (7, 7') is followed by a step 1) of shaping the belt structure.

13. Process for building tyres according to claim 12, wherein the step 1) of shaping the belt structure is carried out by expanding of the auxiliary drum (8).

14. Process for building tyres according to claim 12 or 13, wherein the step 1) of shaping the belt structure is carried out by expanding of at least one between said first building drum (7) and second building drum (7').

15. Plant (1) for building tyres for vehicle wheels comprising:
- at least one carcass structure building line (2), said carcass structure comprising at least one carcass ply and a pair of annular anchoring structures;
- at least one crown structure building line (3), said crown structure comprising at least one belt structure and a tread band;
**characterised in that** the crown structure building line (3) comprises:
- at least one first building drum (7) whereon an annular assembly (4) comprising a first radially inner belt layer and at least one second belt layer radially external to said first belt layer is built;
- at least one auxiliary drum (8) whereon axially opposite end portions of said first belt layer are turned up so as to obtain at least a partial overlapping of the end portions of the first belt layer on said at least one second belt layer;
- at least one second building drum (7') suitable for receiving the annular assembly (4) with the axially opposite end portions of said first belt layer turned up on said at least one second belt layer; and
- at least one device (9) for transferring said annular assembly (4) from said at least one first building drum (7) to said at least one auxiliary drum (8) and from said at least one auxiliary drum (8) to said at least one second building drum (7').

16. Plant (1) for building tyres according to claim 15, wherein said at least one second building drum (7') is equal to said at least one first building drum (7).

17. Plant (1) for building tyres according to claim 15, wherein said second building drum (7') is geometrically different from the first building drum (7).

18. Plant (1) for building tyres according to claim 17, wherein said second building drum (7') comprises a shaping surface.

19. Plant (1) for building tyres according to any one of claims 15 - 18, wherein said auxiliary drum (8) is geometrically different from the first building drum (7).

20. Plant (1) for building tyres according to claim 19, wherein said auxiliary drum (8) comprises a shaping surface.

21. Plant (1) for building tyres according to any one of claims 15 - 20, wherein the crown structure building line (3) comprises at least one turning up work station (28) comprising said at least one auxiliary drum (8) and said at least one transfer device (9).

22. Plant (1) for building tyres according to claim 21, wherein the line for building the crown structure (3) comprises, upstream of the turning up work station (28), the following work stations:
- a work station for applying a first belt (21) provided with devices for applying at least one first belt layer in a position radially external to said first building drum (7); and
- a work station for applying a second belt (23) provided with devices for applying a second belt layer in a position radially external to said first belt layer.

23. Plant (1) for building tyres according to any one of claims 15 - 22, comprising a line for preparing elementary semi-finished products (31) suitable for being supplied in at least one between the carcass structure building line (2) and the crown structure building line (3).

24. Plant (1) for building tyres according to any one of claims 15 - 23, comprising devices for adjusting the dimensions of at least one between the first building drum (7), the second building drum (7') and the auxiliary drum (8).

25. Plant (1) for building tyres according to any one of claims 15 - 24, wherein the crown structure building line (3) is provided with devices for transferring the building drum (7, 7') from a work station of the same crown structure building line (3) to the next work station.

## Patentansprüche

1. Verfahren zum Aufbauen von Reifen für Fahrzeugräder mit den Schritten des:
i) Aufbauens einer Karkassenstruktur eines Rohreifens in wenigstens einer Karkassenstruktur-Aufbaustraße (2), wobei die Karkassenstruktur wenigstens eine Karkassenlage und ein Paar ringförmiger Verankerungsstrukturen aufweist,
ii) Aufbauens einer Zenitstruktur eines Rohreifens in wenigstens einer Zenitstruktur-Aufbaustraße (3), wobei die Zenitstruktur eine Gürtelstruktur und ein Laufflächenband aufweist,
wobei der Schritt ii) des Aufbauens der Zenitstruktur wenigstens einen Schritt iii) des Aufbauens der Gürtelstruktur aufweist, der wiederum als Schritte aufweist:
a) Aufbauen auf wenigstens einer Aufbautrommel (7) einer ringförmigen Anordnung (4) mit einer ersten radial inneren Gürtelschicht und wenigstens einer zweiten Gürtelschicht radial außerhalb der ersten Gürtelschicht,
b) Transferieren der ringförmigen Anordnung (4) auf wenigstens eine Hilfstrommel (8),
c) Umschlagen von axial gegenüberliegenden Endabschnitten der ersten radial inneren Gürtelschicht, um wenigstens ein teilweises Überlappen der Endabschnitte der ersten Gürtelschicht auf der wenigstens einen zweiten radial äußeren Gürtelschicht zu erzielen,
d) Transferieren der ringförmigen Anordnung (4) von der wenigstens einen Hilfstrommel (8) auf wenigstens eine zweite Aufbautrommel (7').

2. Verfahren nach Anspruch 1, bei dem der Schritt a) des Aufbauens der ringförmigen Anordnung (4) den weiteren Schritt des Aufbauens einer dritten Gürtelschicht aufweist.

3. Verfahren nach Anspruch 2, bei dem die dritte Gürtelschicht radial außerhalb der zweiten Gürtelschicht ist.

4. Verfahren nach Anspruch 2, bei dem die dritte Gürtelschicht radial innerhalb der ersten Gürtelschicht ist.

5. Verfahren nach Anspruch 3, bei dem der Schritt c) des Herumschlagens den Schritt des Herumschlagens von axial gegenüberliegenden Endabschnitten der ersten radial inneren Gürtelschicht aufweist, um wenigstens ein teilweises Überlappen der Endabschnitte der ersten Gürtelschicht auf der zweiten Gürtelschicht radial außerhalb der ersten Gürtelschicht und auf der dritten Gürtelschicht radial außerhalb der zweiten Gürtelschicht zu erzielen.

6. Verfahren zum Aufbauen von Reifen nach einem der vorhergehenden Ansprüche, bei dem der Schritt ii) nach dem Schritt d) einen Schritt e) aufweist des:
Aufbringens wenigstens einer ersten Schicht aus Textil- oder Metallkorden, die umfänglich angeordnet sind, in einer Position radial außerhalb der ringförmigen Anordnung (4).

7. Verfahren zum Aufbauen von Reifen nach einem der vorhergehenden Ansprüche, bei dem der Schritt c) des Herumschlagens der axial gegenüberliegenden Endabschnitte der ersten radial inneren Gürtelschicht auf die wenigstens eine zweite radial äußere Gürtelschicht in einer Umschlage-Bearbeitungsstation (28) der Zenitstruktur-Aufbaustraße (3) durchgeführt wird.

8. Verfahren zum Aufbauen von Reifen nach einem der vorhergehenden Ansprüche, bei dem wenigstens einer zwischen Schritten a) und e) den Vorschritt h) des Bereitstellens von elementaren Halbfertigprodukten in den jeweiligen Bearbeitungsstationen aufweist.

9. Verfahren zum Aufbauen von Reifen nach Anspruch 8, bei dem die elementaren Halbfertigprodukte Streifen aus Elastomermaterial sind, die auf Größe geschnitten wurden und die wenigstens ein textiles oder metallisches längliches Verstärkungselement darin enthalten.

10. Verfahren zum Aufbauen von Reifen nach Anspruch 8 oder 9, bei dem die elementaren Halbfertigprodukte nahe zueinander so aufgebracht werden, dass deren Längsachse wenigstens entlang eines Abschnitts den gleichen vorbestimmten Winkel mit der Umfangsrichtung der ersten Aufbautrommel (7) aufweisen.

11. Verfahren zum Aufbauen von Reifen nach einem der vorhergehenden Ansprüche, ferner mit dem Schritt j) des Anpassens der Dimensionen von wenigstens einer unter der ersten Aufbautrommel (7), der zweiten Aufbautrommel (7') und der Hilfstrommel (8).

12. Verfahren zum Aufbauen von Reifen nach einem der vorhergehenden Ansprüche, bei dem wenigstens einer zwischen Schritt b) des Transferierens der ringförmigen Anordnung (4) auf wenigstens eine Hilfstrommel (8) und Schritt d) des Transferierens der ringförmigen Anordnung (4) auf die wenigstens eine erste oder zweite Aufbautrommel (7, 7') von einem Schritt 1) des Formens der Gürtelstruktur gefolgt wird.

13. Verfahren zum Aufbauen von Reifen nach Anspruch 12, bei dem der Schritt 1) des Formens der Gürtelstruktur durch Expandieren der Hilfstrommel (8) durchgeführt wird.

14. Verfahren zum Aufbauen von Reifen nach Anspruch 12 oder 13, bei dem der Schritt 1) des Formens der Gürtelstruktur durch Expandieren der ersten Aufbautrommel (7) und/oder der zweiten Aufbautrommel (7') durchgeführt wird.

15. Fabrik (1) zum Aufbauen von Reifen für Fahrzeugräder mit:
- wenigstens einer Karkassenstruktur-Aufbaustraße (2), wobei die Karkassenstruktur wenigstens eine Karkassenlage und ein Paar ringförmiger Verankerungsstrukturen aufweist,
- wenigstens einer Zenitstruktur-Aufbaustraße (3), wobei die Zenitstruktur wenigsten eine Gürtelstruktur und ein Laufflächenband aufweist,
**dadurch gekennzeichnet, dass** die Zenitstruktur-Aufbaustraße (3) aufweist:
- wenigstens eine Aufbautrommel (7), auf der eine ringförmige Anordnung (4) mit einer ersten radial inneren Gürtelschicht und wenigstens einer zweiten Gürtelschicht, die radial außerhalb der ersten Gürtelschicht ist, aufgebaut wird,
- wenigstens eine Hilfstrommel (8), auf der axial gegenüberliegende Endabschnitte der ersten Gürtelschicht so herumgeschlagen werden, dass wenigstens ein teilweises Überlappen der Endabschnitte der ersten Gürtelschicht auf der wenigstens einen zweiten Gürtelschicht erzielt wird,
- wenigstens eine zweite Aufbautrommel (7) geeignet zum Empfangen der ringförmigen Anordnung (4) mit den axial gegenüberliegenden Endabschnitten der ersten Gürtelschicht auf die wenigstens eine zweite Gürtelschicht herumgeschlagen und
- wenigstens einer Einrichtung (9) zum Transferieren der ringförmigen Anordnung (4) von der wenigstens einen Aufbautrommel (7) zu der wenigstens einen Hilfstrommel (8) und von der wenigstens einen Hilfstrommel (8) zu der wenigstens einen zweiten Aufbautrommel (7').

16. Fabrik (1) zum Aufbauen von Reifen nach Anspruch 15, bei der die wenigstens eine zweite Aufbautrommel (7') die gleiche ist wie die wenigstens eine erste Aufbautrommel (7).

17. Fabrik (1) zum Aufbauen von Reifen nach Anspruch 15, bei der die zweite Aufbautrommel (7') geometrisch von der ersten Aufbautrommel (7) verschieden ist.

18. Fabrik (1) zum Aufbauen von Reifen nach Anspruch 17, bei der die zweite Aufbautrommel (7') eine Formungsoberfläche aufweist.

19. Fabrik (1) zum Aufbauen von Reifen nach einem der Ansprüche 15 bis 18, bei der die Hilfstrommel (8) geometrisch von der ersten Aufbautrommel (7) verschieden ist.

20. Fabrik (1) zum Aufbauen von Reifen nach Anspruch 19, bei der die Hilfstrommel (9) eine Formungsoberfläche aufweist.

21. Fabrik (1) zum Aufbauen von Reifen nach einem der Ansprüche 15 bis 20, bei der die Zenitstruktur-Aufbaustraße (3) wenigstens eine Herumschlag-Bearbeitungsstation (28) mit der wenigstens einen Hilfstrommel (8) und wenigstens einer Transfereinrichtung (9) aufweist.

22. Fabrik (1) zum Aufbauen von Reifen nach Anspruch 21, bei der die Straße zum Aufbauen der Zenitstruktur (3) der Herumschlag-Bearbeitungsstation (28) vorgelagert folgende Bearbeitungsstationen aufweist:
- eine Bearbeitungsstation zum Aufbringen eines ersten Gürtels (21), die mit Einrichtungen zum Aufbringen wenigstens einer ersten Gürtelschicht in einer Position radial außerhalb der ersten Aufbautrommel (7) versehen ist, und
- eine Bearbeitungsstation zum Aufbringen eines zweiten Gürtels (23), die mit Einrichtungen zum Aufbringen einer zweiten Gürtelschicht an einer Position radial außerhalb der ersten Gürtelschicht versehen ist.

23. Fabrik (1) zum Aufbauen von Reifen nach einem der Ansprüche 15 bis 22, mit einer Straße zum Vorbereiten von elementaren Halbfertigprodukten (31), die dafür geeignet sind, wenigstens in einem zwischen der Karkassenstruktur-Aufbaustraße (2) und der Zenitstruktur-Aufbaustraße (3) zugeführt zu werden.

24. Fabrik (1) zum Aufbauen von Reifen nach einem der Ansprüche 15 bis 23 mit Einrichtungen zum Einstellen der Dimensionen von wenigstens einer unter der ersten Aufbautrommel (7), der zweiten Aufbautrommel (7') und der Hilfstrommel (8).

25. Fabrik (1) zum Aufbauen von Reifen nach einem der Ansprüche 15 bis 24, bei der die Zenitstruktur-Aufbaustraße (3) mit Einrichtungen zum Transferieren der Aufbautrommel (7, 7') von einer Bearbeitungsstation der gleichen Zenitstruktur-Aufbaustraße (3) zu der nächsten Bearbeitungsstation versehen ist.

## Revendications

1. Procédé de fabrication de pneus pour roues de véhicule, comportant les étapes consistant à :
i) la fabrication d'une structure de carcasse d'un pneu cru dans au moins une ligne de fabrication de structure de carcasse (2), ladite structure de carcasse comportant au moins une nappe de carcasse et une paire de structures d'ancrage annulaires ;
ii) la fabrication d'une structure de sommet d'un pneu cru dans au moins une ligne de fabrication de structure de sommet (3), ladite structure de sommet comportant une structure de ceinture et une bande de roulement ;
dans lequel l'étape ii) de fabrication de structure de sommet comporte au moins une étape iii) de fabrication de structure de ceinture qui comporte à son tour les étapes consistant à :
a) fabrication sur au moins un premier tambour de fabrication (7) d'un assemblage annulaire (4) comportant une première couche de ceinture radialement intérieure et au moins une deuxième couche de ceinture radialement extérieure à ladite première couche de ceinture ;
b) transfert dudit assemblage annulaire (4) sur au moins un tambour auxiliaire (8) ;
c) retournement des parties d'extrémité axialement opposées de la première couche de ceinture radialement intérieure de manière à obtenir au moins un chevauchement partiel des parties d'extrémité de la première couche de ceinture sur ladite au moins une deuxième couche de ceinture radialement extérieure ;
d) transfert dudit assemblage annulaire (4) à partir dudit au moins un tambour auxiliaire (8) sur au moins un deuxième tambour de fabrication (7').

2. Procédé selon la revendication 1, dans lequel l'étape a) de fabrication de l'assemblage annulaire (4) comporte l'étape supplémentaire de fabrication d'une troisième couche de ceinture.

3. Procédé selon la revendication 2, dans lequel ladite troisième couche de ceinture est radialement extérieure à ladite deuxième couche de ceinture.

4. Procédé selon la revendication 2, dans lequel ladite troisième couche de ceinture est radialement interne à ladite première couche de ceinture.

5. Procédé selon la revendication 3, dans lequel l'étape c) de retournement comporte l'étape consistant à retourner des parties d'extrémité axialement opposées de ladite première couche de ceinture radialement intérieure de manière à obtenir au moins un chevauchement partiel des parties d'extrémité de la première couche de ceinture sur ladite deuxième couche de ceinture radialement extérieure à la première couche de ceinture et sur ladite troisième couche de ceinture radialement extérieure à ladite deuxième couche de ceinture.

6. Procédé de fabrication de pneus selon l'une quelconque des revendications précédentes, dans lequel ladite étape iii) comporte, après l'étape d), une étape e) de :
application d'au moins une première couche de fils textiles ou métalliques, disposés circonférentiellement, dans une position radialement extérieure audit assemblage annulaire (4).

7. Procédé de fabrication de pneus selon l'une quelconque des revendications précédentes, dans lequel ladite étape c) de retournement des parties d'extrémité axialement opposées de ladite première couche de ceinture radialement intérieure sur ladite au moins une deuxième couche de ceinture radialement extérieure est réalisée à un poste de travail de retournement (28) de la ligne de fabrication de structure de sommet (3).

8. Procédé de fabrication de pneus selon l'une quelconque des revendications précédentes, dans lequel au moins l'une des étapes a) et e) comporte la pré-étape h) de fourniture de produits semi-finis élémentaires dans des postes de travail respectifs.

9. Procédé de fabrication de pneus selon la revendication 8, dans lequel lesdits produits semi-finis élémentaires sont des bandes de matériau élastomère coupées sur mesure et comportant à l'intérieur au moins un élément de renfort allongé textile ou métallique.

10. Procédé de fabrication de pneus selon la revendication 8 ou 9, dans lequel lesdits produits semi-finis élémentaires sont appliqués côte à côte de telle sorte que leur axe longitudinal présente au moins le long d'une partie le même angle prédéterminé avec la direction circonférentielle du premier tambour de fabrication (7).

11. Procédé de fabrication de pneus selon l'une quelconque des revendications précédentes, comportant en outre l'étape j) de réglage des dimensions d'au moins un tambour parmi le premier tambour de fabrication (7), le deuxième tambour de fabrication (7') et le tambour auxiliaire (8).

12. Procédé de fabrication de pneus selon l'une quelconque des revendications précédentes, dans lequel au moins une étape parmi l'étape b), de transfert de l'assemblage annulaire (4) sur au moins un tambour auxiliaire (8), et l'étape d), de transfert de l'assemblage annulaire (4) sur ledit au moins un premier ou deuxième tambour de fabrication (7, 7'), est suivie par une étape I) de formage de la structure de ceinture.

13. Procédé de fabrication de pneus selon la revendication 12, dans lequel l'étape I) de formation de la structure de ceinture est réalisée par expansion du tambour auxiliaire (8).

14. Procédé de fabrication de pneus selon la revendication 12 ou 13, dans lequel l'étape I) de formage de la structure de ceinture est effectuée par expansion d'au moins un tambour parmi lesdits premier tambour de fabrication (7) et deuxième tambour de fabrication (7').

15. Installation (1) de fabrication de pneus pour roues de véhicule comportant :
- au moins une ligne de fabrication de structure de carcasse (2), ladite structure de carcasse comportant au moins une nappe de carcasse et une paire de structures d'ancrage annulaires ;
- au moins une ligne de fabrication de structure de sommet (3), ladite structure de sommet comportant au moins une structure de ceinture et une bande de roulement ;
**caractérisé en ce que** la ligne de fabrication de structure de sommet (3) comporte :
- au moins un premier tambour de fabrication (7) sur lequel est fabriqué un assemblage annulaire (4) comportant une première couche de ceinture radialement intérieure et au moins une deuxième couche de ceinture radialement extérieure à ladite première couche de ceinture ;
- au moins un tambour auxiliaire (8) sur lequel des parties d'extrémité axialement opposées de ladite première couche de ceinture sont retournées de manière à obtenir au moins un chevauchement partiel des parties d'extrémité de la première couche de ceinture sur ladite au moins une deuxième couche de ceinture ;
- au moins un deuxième tambour de fabrication (7') apte à recevoir l'assemblage annulaire (4) avec les parties d'extrémité axialement opposées de ladite première couche de ceinture retournées sur ladite au moins une deuxième couche de ceinture ; et
- au moins un dispositif (9) pour transférer ledit assemblage annulaire (4) à partir dudit au moins un premier tambour de fabrication (7) vers ledit au moins un tambour auxiliaire (8) et à partir dudit au moins un tambour auxiliaire (8) vers ledit au moins un deuxième tambour de fabrication (7').

16. Installation (1) de fabrication de pneus selon la revendication 15, dans laquelle ledit au moins un deuxième tambour de fabrication (7') est égal au dit au moins un premier tambour de fabrication (7).

17. Installation (1) de fabrication de pneus selon la revendication 15, dans laquelle ledit deuxième tambour de fabrication (7') est géométriquement différent du premier tambour de fabrication (7).

18. Installation (1) de fabrication de pneus selon la revendication 17, dans laquelle ledit deuxième tambour de fabrication (7') comporte une surface de formage.

19. Installation (1) de fabrication de pneus selon l'une quelconque des revendications 15 à 18, dans laquelle ledit tambour auxiliaire (8) est géométriquement différent du premier tambour de fabrication (7).

20. Installation (1) de fabrication de pneus selon la revendication 19, dans laquelle ledit tambour auxiliaire (8) comporte une surface de formage.

21. Installation (1) de fabrication de pneus selon l'une quelconque des revendications 15 à 20, dans laquelle la ligne de fabrication de structure de sommet (3) comporte au moins un poste de travail de retournement (28) comportant ledit au moins un tambour auxiliaire (8) et ledit au moins un dispositif de transfert (9).

22. Installation (1) de fabrication de pneus selon la revendication 21, dans laquelle la ligne pour la fabrication de structure de sommet (3) comporte, en amont du poste de travail de retournement (28), les postes de travail suivants :
- un poste de travail pour appliquer une première ceinture (21) pourvue de dispositifs pour appliquer au moins une première couche de ceinture dans une position radialement extérieure au dit premier tambour de fabrication (7) ; et
- un poste de travail pour appliquer une deuxième ceinture (23) pourvue de dispositifs pour appliquer une deuxième couche de ceinture dans une position radialement extérieure à ladite première couche de ceinture.

23. Installation (1) de fabrication de pneus selon l'une quelconque des revendications 15 à 22, comportant une ligne pour la préparation de produits semi-finis élémentaires (31) aptes à être fournis dans au moins une ligne entre la ligne de fabrication de structure de carcasse (2) et la ligne de fabrication de structure de sommet (3).

24. Installation (1) de fabrication de pneus selon l'une quelconque des revendications 15 à 23, comportant des dispositifs pour ajuster les dimensions d'au moins un tambour parmi le premier tambour de fabrication (7), le deuxième tambour de fabrication (7') et le tambour auxiliaire (8).

25. Installation (1) de fabrication de pneus selon l'une quelconque des revendications 15 à 24, dans laquelle la ligne de fabrication de structure de sommet (3) est munie de dispositifs pour transférer le tambour de fabrication (7, 7') à partir d'un poste de travail de la même ligne de fabrication de structure de sommet (3) vers le poste de travail suivant.
